# EUROPEAN PATENT SPECIFICATION

(11) **EP 3 086 618 B1**
(45) Date of publication and mention of the grant of the patent: **20.06.2018**
(21) Application number: 16165507.1
(22) Date of filing: 15.04.2016
(51) Int. Cl.: H04W 84/04, H04W 84/12, H04L 29/12, H04W 76/10

(54) **REPEATING METHOD AND CORRESPONDING COMMUNICATION NETWORK DEVICE, SYSTEM, COMPUTER READABLE PROGRAM PRODUCT AND COMPUTER READABLE STORAGE MEDIUM**
WIEDERHOLUNGSVERFAHREN UND ENTSPRECHENDE KOMMUNIKATIONSNETZWERKVORRICHTUNG, SYSTEM, COMPUTERLESBARES PROGRAMMPRODUKT UND COMPUTERLESBARES SPEICHERMEDIUM
PROCEDE DE REPETITION ET DISPOSITIF, SYSTEME, PRODUIT LOGICIEL LISIBLE PAR ORDINATEUR ET SUPPORT DE STOCKAGE LISIBLE PAR ORDINATEUR CORRESPONDANT POUR RESEAU DE COMMUNICATION

(30) Priority: 23.04.2015 EP 15305625
(43) Date of publication of application: 26.10.2016
(73) Proprietor: Thomson Licensing, 92130 Issy-les-Moulineaux (FR)
(72) Inventor: JEANNE, Ludovic, 35576 Cesson-Sévigné (FR); GRAEF, Lucien, 35576 Cesson-Sévigné (FR); TOSTIVINT, Cyril, 35510 Cesson-Sévigné (FR)
(74) Representative: Tarquis-Guillou, Anne

(56) References cited:
- EP-A1- 2 608 624
- WO-A1-2004/002014
- US-A1- 2014 254 471
- US-B1- 6 968 153
- "IEEE Standard for Information technology--Telecommunications and information exchange between systems Local and metropolitan area networks--Specific requirements Part 11: Wireless LAN Medium Access Control (MAC) and Physical Layer (PHY) Specifications;IEEE Std 802.11-2012 (Revision of IEEE Std 802.1", IEEE STD 802.11-2012, IEEE COMPUTER SOCIETY, NEW YORK, USA, 29 March 2012 (2012-03-29), pages 1-2793, XP068050195, ISBN: 978-0-7381-7211-8

## Description

### 1. Technical field

The present disclosure relates to the field of communication network devices, like repeater devices, allowing coverage extension of a network, and notably to repeater devices comprising wireless interfaces and notably allowing coverage extension of a wireless network.

A repeating method and corresponding communication network device, system, computer readable program product and computer readable storage medium are described.

### 2. Background art

Wireless communication end-devices, for instance smartphones, tablets, personal computers or peripherals like printers, have become widely used nowadays. They may exchange data with other wireless communication devices inside a wireless network, for instance a wireless local area network (WLAN), either directly or thanks to an intermediary, or "bridge", device. Access to another network is often provided to a wireless communication device thanks to a network interconnection device (or "gateway"), comprising a wireless communication interface, like WIFI® or Bluetooth interface, and a communication interface to the other network (for instance a wide area network (WAN), such as an internet type network).

Document US2014254471 A1 discloses a wireless communication system comprising a plurality of wireless stations communicating using a first air interface protocol a relay device, and an access point, wherein the plurality of wireless stations communicate with entities in a wide area network via the access point without establishing a direct wireless link with the access point, and wherein the relay device communicates with the plurality of wireless stations using the first air interface protocol and communicates with the access point using a second, different, wireless communication protocol. The second communication protocol, e.g., could be a backhaul protocol that is used by the access point to communicate with other access points in the system.

In order to extend the coverage area of the wireless network, a communication device (called a "repeater" or "extender") may be used as an intermediate device between two devices communicating by wireless means, in order to receive the frames transmitted from one device and to transmit them to the other device, and vice-versa. Repeaters are notably used for improving exchanges between gateway and end-devices.

Document WO2004002014 A1 discloses a repeater that facilitates wireless communication between a first communication device and a second communication device in a wireless network using a time division duplex protocol for data transmission. The repeater includes a receiver for receiving a signal on either of at least two bi-directional communication frequencies simultaneously. A signal detector is operatively coupled to the receiver for determining if the signal is present on at least one of the two bi-directional frequencies. A frequency converter is for converting the signal present on one of the bi-directional frequencies to a converted signal on the other of the bi-directional frequencies. A transmitter is for transmitting the converted signal on the other of said bi-directional frequencies.

In many network environments, like according to WIFI or Ethernet protocol, a device is uniquely identified by its Media Access Control (MAC) address, referring to the "data link layer" (also called "level 2 layer") of the Open Systems Interconnection (OSI) model.

When a client device, identified by its MAC address, connects to a conventional wireless repeater configured in "bridge" mode, the repeater usually creates a "virtual client" (or "proxy client") having a different MAC address than the client MAC address in order to dialog with the gateway.

This MAC address translation is performed in order to avoid collision. Indeed, Wireless Network communication protocols often make use of acknowledgment mechanisms in order to be sure, at the transmitter side, that a transmitted frame has effectively been received by its destination device. Once a frame is received, the destination device replies by a message to the transmitter of the frame, in order to acknowledge the reception.

Without a MAC address translation, if a wireless client device is located in the common coverage area of the gateway and the repeater, it may happen that a frame transmitted to the client device by the gateway is received both by the repeater (for retransmission to the client device) and, directly, by the client device. Thus, as the response time for acknowledgment is then determined by the protocol (like by the value of the variable "Short Interval Frame Space" (SIFS) according to Wi-Fi protocol), two acknowledgement frames will be emitted at the same time (one by the client device and one by the repeater), leading to a collision of the two acknowledgement frames. Thus, as the acknowledgements will be lost, the frame sent by the gateway will be considered, on the gateway side, as not being received by its destination.

Because of the MAC address translation mechanism implemented in the repeater, the only receiver of a frame transmitted from the gateway is the virtual client and, as a consequence, only one acknowledgment is sent to the gateway. There is no data collision and the acknowledgement is properly received.

However, MAC address translation has drawbacks.

In particular, the MAC address translation raises the number of operations to be performed when a new client device is discovered by the repeater. As a consequence, the complexity of the discovery phase and the time needed for a client device to be connected to the wireless repeater increases.

Furthermore, the gateway will receive frames with two different source MAC addresses initially emitted by a client device, depending on whether they are received directly from the client device or relayed by the repeater.

If a client device is first communicating with the gateway via the repeater, it is known by its translated MAC address by the gateway. If the client device then roams from the Wi-Fi repeater to the gateway, the gateway receives, directly, a frame sent from the client device with a source MAC address being the actual, non-translated, MAC address of the client device. Thus, the gateway detects the roaming client as being a new device. Therefore, if the gateway is configured as hosting a "Dynamic Host Configuration Protocol" (DHCP) server, providing each of its client devices with a different Internet Protocol (IP) address for instance, it provides a new IP address to the roaming client device.

As a consequence, according to the solutions of the prior art, all active IP connections of a client device, at the time of the roaming of the client device, are lost after the roaming of the client device.

So, there's a need to provide a solution that improves the user experience of a user of a wireless client device compared to prior art solutions.

### 3. Summary of the present disclosure.

The present principles enable at least one of the above disadvantages to be resolved by proposing a method to be performed in an intermediate device of a communication network for repeating data received from a client device of said communication network by forwarding said data to a wireless access point of said communication network according to the subject-matter of independent claim 1.

Corresponding intermediate device according to the subject-matter of independent claim 7, system comprising an intermediate device according to the subject-matter of independent claim 10, non-transitory computer readable program product according to the subject-matter of independent claim 14 and computer readable storage medium according to the subject-matter of independent claim 15 are also disclosed.

Embodiments of the invention are defined in the dependent claims.

### 4. List of drawings.

The present disclosure will be better understood, and other specific features and advantages will emerge upon reading the following description, the description making reference to the annexed drawings wherein:
- Figure 1a shows an example of a wireless distribution system according to a particular embodiment of the present disclosure;
- Figure 1b illustrates a view of exchanges of frames, via a repeater, between some devices of the distribution system of the present disclosure, when the frequency bands used by the devices to communicate with the repeater are different or when one of the communication device is connected to the repeater via a wired connection;
- Figure 2 is a functional diagram that illustrates a particular embodiment of the repeating method of the present disclosure, compatible with the embodiment illustrated by figures 1a and 1b;
- Figure 3 illustrates a repeater adapted to at least one particular embodiment of the present disclosure.

It is to be noted that the drawings have only an illustration purpose and that the embodiments of the present disclosure are not limited to the illustrated embodiments.

### 5. Detailed description of the embodiments.

At least one embodiment of the present disclosure offers a new way of transmitting frames, for a repeater device comprising wireless interfaces, inside a communication network also comprising a plurality of communication devices, at least one of those communication device being a first wireless device.

During the retransmission of data, received in a first frame from a second wireless device of those communication devices, to the first wireless device, the repeater transmits the data in a second frame comprising a field representing the address of the transmitter of the second frame having the value of the address of the transmitter of the first frame, when the frequency used for exchanging frames with both devices are different. Indeed, in such a situation, a frame transmitted by one of the devices at one frequency will not be received by the other device operating at another frequency. As a consequence, as only one acknowledgment will be transmitted, no collision of acknowledgment will occur.

Similarly, as there is no risk of collision of acknowledgments when a communication device uses a second interface using a communication protocol different from the communication protocol of the first wireless interface (for instance when it uses a wired interface to communicate with the repeater), the repeater transmits, to the wireless device, data contained in a first frame, received via the second interface, in a second frame comprising a field representing the address of the transmitter of the second frame having the value of the address of the transmitter of the first frame.

Notably, in some embodiments, when data is received from a communication interface, unknown from the repeater, the method comprises a creation of a virtual client with a virtual address obtained by a conditional application of an address translation algorithm. In the case where no translation algorithm is applied, a virtual client is created with the source address of the unknown communication interface. Thus, in at least some of its embodiments, the present disclosure proposes a solution that is simpler and time saving when the frequencies used by the communication interfaces of both devices are different or when one is a wired interface.

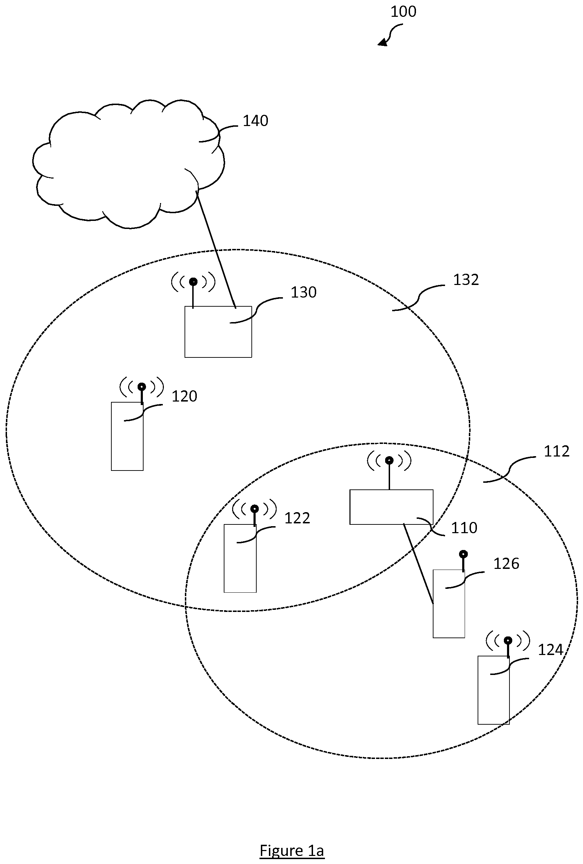

In the detailed embodiment illustrated in **figure 1a,** a wireless distribution system 100 is described.

The system, for instance a Wi-Fi distribution system, comprises a repeater 110 (for instance a set-top box with at least one Wi-Fi interface), and communication devices, notably a network interconnection device 130 (for instance a gateway, another Wi-Fi repeater, or a Wi-Fi router), and wireless client devices 120, 122, 124 (for instance mobile devices such as, but not limited to, smart phones or tablets). It can also comprise wired client devices 126, connected for instance via a wired interface to the Wi-Fi repeater.

The repeater 110 can be associated, as a client to the network interconnection device 130.

A client device 120, 122 can be located in a coverage area 132 of the network interconnection device. It can also be located in a coverage area 112 of the repeater 110 (like client devices 122, 124 of figure 1a).

In the illustrated embodiment, the gateway, the Wi-Fi repeater and the client devices exchange data inside said network in frames comprising a source address, identifying a transmitter of the frame. (For instance, for a Wi-Fi frame, this source address can be the field "address 2" of the Wi-Fi frame).

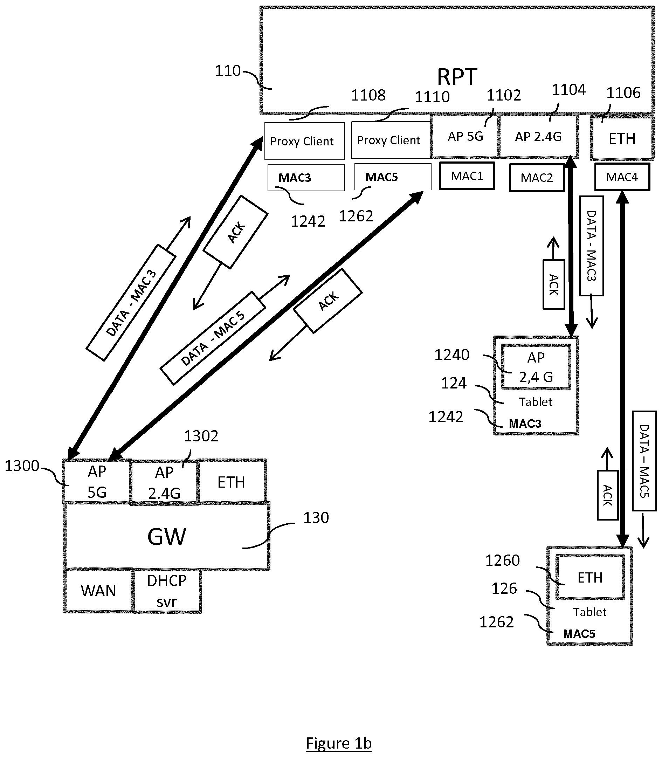

In the illustrated embodiment, the network interconnection device 130 is a gateway, also acting as a DHCP server, connected to another network 140 (for example a network of an internet access provider) over a WAN interface, and equipped with other communication interfaces, notably a Wireless communication interface, like a Wi-Fi Access Point, operating in at least one first frequency, for instance at 5 GHz as illustrated in **figure 1b** (like the access point with reference 1300).

The DHCP Server of the gateway 130 can assign to each client device an IP address, enabling the unique designation of an interface with the network 140 using the Internet Protocol.

The Wi-Fi repeater, in this example, is a dual band repeater. One skilled in the art can appreciate that the techniques disclosed herein can also be applied where more than two bands of operating frequencies are utilized. In the illustrated embodiment of **figure 1b****,** the Wi-Fi repeater 110 comprises different communication interfaces, and notably two Wireless interfaces operating at different frequencies:
- a first Wi-Fi Access Point 1104 operating at 2.4 GHz ;
- a second Wi-Fi Access Point 1102 operating at 5 GHz.

At least one of those different frequencies corresponds to an operating frequency of a Wi-Fi Access Point 1300, 1302 of the gateway.

In the illustrated embodiment of figure 1b, the Wi-Fi repeater 110 also comprises at least one wired interface, for instance an Ethernet interface 1106.

The repeater 110 is connected (as a client) to an access point 1300 of the gateway 130 by a wireless connection involving an Wi-Fi access point 1102 of the Wi-Fi repeater operating as the same frequency as the access point of the gateway. For instance, the 5 GHz second Access Point 1102 of the repeater 110 is connected to the 5 GHz Access Point 1300 of the gateway 130. This may be achieved by creating virtual clients on the repeater.

A client device 124 (for instance a tablet) can request a connection to the Wi-Fi repeater 110 using the first Wi-Fi access point 1104 of the repeater 110 (operating at a different frequency than the Wi-Fi access point 1300 of the gateway 130 in the illustrated embodiment), or the second Wi-Fi access point 1102 of the repeater (operating at the same frequency as the Wi-Fi access point 1300 of the gateway 130 in the illustrated embodiment). A client device 126, comprising an Ethernet interface 1260, can also be linked to the repeater 110 via an Ethernet interface 1106 of the repeater. It is to be noted that figure 1b is a simplified illustration, for purpose of clarity. For instance, client devices 120, 122 of figure 1a are not illustrated.

In the embodiment shown, where a wireless protocol of Wi-Fi type is used, each wireless access point is identified by a string of alphanumerical characters, such as an SSID (Service Set Identifier). It is also identified by a MAC address, which makes it possible to guarantee a unique identification of each access point. A MAC address can also be used to identify an Ethernet interface of a communication device.

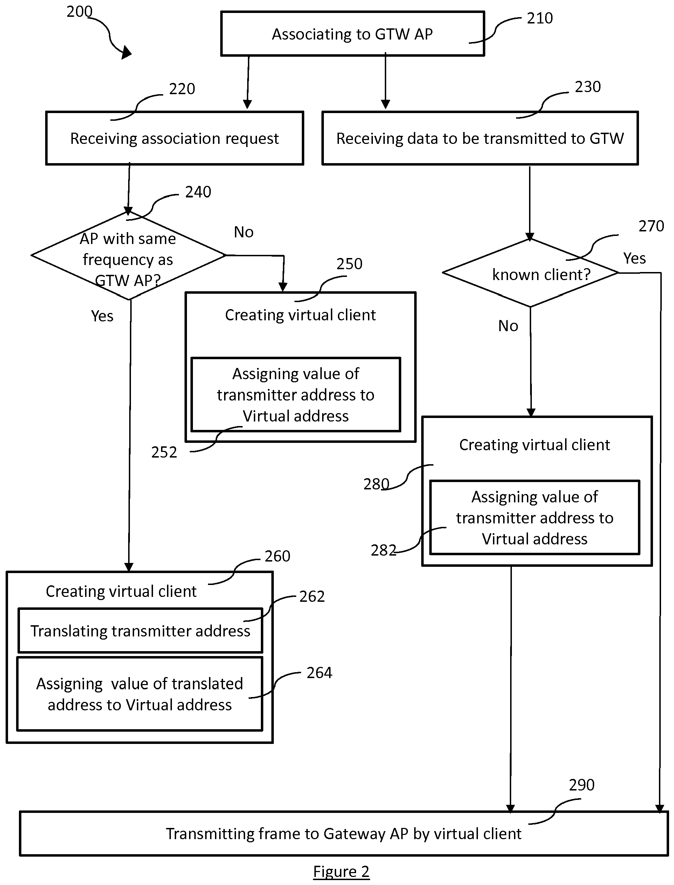

**Figure 2** shows the repeating method 200 of the present disclosure, in a particular embodiment, implemented in the WIFI repeater 110.

According to the detailed embodiment, as illustrated by figures 1b and 2, the repeating method comprises associating 210 the repeater 110 with an access point 1300 of the gateway 130. Depending on the embodiments, and notably depending on the access points of the gateway, the Wi-Fi access points of the repeater involved in this associating can differ. In some embodiments, only one wireless access point of the repeater is associated with an access point of the gateway. In other embodiments (implementing for instance an algorithm, like a spanning tree algorithm, in order to avoid unwilling loops), several wireless access points of the repeater can be associated respectively with different access points of the gateway. Such embodiments can permit the repeater to choose dynamically the best path to be used with the gateway.

The associating 210 can be performed for instance during a boot and/or an initialization of the repeater and/or the gateway.

The method of the present disclosure also comprises receiving 220, 230 a frame sent by a client device 124, 126 (for instance a DHCP request), comprising an address of its transmitter (for instance, in the particular embodiment described, a MAC address (MAC3, MAC 5) 1242, 1262 of its transmitter 124, 126).

The received frame can, for instance, comprise data to be transmitted to the gateway, or data to the attention of the repeater itself, like an association request when the frame is received via a wireless interface of the repeater.

In the illustrated embodiment, when receiving 220 a frame (via a wireless interface) corresponding to a request from a transmitter to be associated with the repeater, the method comprises creating a virtual client, corresponding to the transmitter, and having a virtual address.

According to the illustrated embodiment, the way the virtual client device is created can depend 240 on the frequency of the transmission channel used by the receiving access point (1102, 1104), as compared to the frequency of the transmission channel used by the gateway access point 1300.

If the receiving Wi-Fi access point 1104 of the repeater 110 (and thus the access point 1240 of the device 124) uses a frequency different than the one used by the access point 1300 of the gateway 130, then the method comprises creating 250 a virtual client 1108 (or proxy client) for the transmitter, said creating 250 comprising assigning 252 to the virtual address of the virtual client the value of the MAC address 1242 of the client device 124.

If the receiving interface of the repeater is a Wi-Fi access point 1102 operating at the same frequency as the one used by the access point 1300 of the gateway 130 to which the repeater 110 is connected, then the method comprises creating 260 a virtual client (or proxy client) for the transmitter, said creating 260 comprising translating 262 the MAC address (MAC3) 1242 of the transmitting access point 1240 of the device 124. This translating results in a translated address, different from the address 1242 of the transmitting access point.

The creating 260 also comprises assigning 264 to the virtual address of the virtual client the value of the translated address.

When receiving 230 data to be transmitted to the gateway, in a frame comprising an address of a transmitter, the transmitter may correspond or not (270) to an already created virtual client of the repeater. For instance, a virtual client may have already been created if in association request has already been received or if a previous frame has already been received via the wired interface.

In the illustrated embodiment, when data is received via a wired interface from an unknown transmitter, the method comprises creating 280 a virtual client 1110 associated to the transmitter and having a virtual address, the creating 280 comprising assigning 282 to the virtual address of the virtual client the value of the MAC address 1262 of the wired interface 1260 of the client device 126.

Once a virtual client has been created 270, or when the transmitter corresponds to an already created (or known) virtual client, the method further comprises transmitting 290 the received data to the access point 1300 of the gateway 130 to which the repeater 110 is connected thanks to the virtual client.

In the illustrated embodiment, the data contained in the received frame is transmitted 290 in a Wi-Fi frame having a header comprising the MAC address of the virtual client in its source address field.

In the particular case where the data transmitted to the gateway is a DHCP request, the gateway 130 (acting as a DHCP server) will reply with an ACK message, comprising an IP address attributed according to the MAC address of the virtual client.

More precisely, if the Wi-Fi client 124 roams from the repeater 110 to the gateway 130, when the gateway 1300 has already received a DHCP request from the virtual client device 1108, and makes a DHCP request received directly by the gateway 130, the request will contain the MAC address MAC3 1242 of the client device 124.

According to the illustrated embodiment, when the client device 124 is a wireless device operating at a different frequency than the gateway, the virtual client 1108 is assigned the MAC address 1242 of the client device 124.

As the MAC address 1242 of the client device 124 is the same MAC address 1242 as the virtual client device 1108, which is already known from the gateway 130 (acting as a server DHCP), the DHCP module of the gateway allocates the same IP address (previously attributed to the virtual client device) to the client device 124.

Thus, if some IP connections were already initiated at the time of the roaming of the client device 124, they are not disrupted by the roaming (as is the case when an address translation algorithm is applied).

If the client device 124 is connected directly to the gateway 130 and roams to the coverage area of the repeater 110, and the repeater assigns to the virtual client 1108 the client device MAC source address, the gateway will attribute to the virtual client the same IP address as the one attributed to the client device. Thus, no disruption of IP connection of the client device is generated either. This is especially useful in the case of a client device being a mobile terminal in the neighborhood of different access points while being moved.

In some of the above embodiments, the presence of the repeater is transparent to the exchanges between the gateway and the client device, at an "IP address "level.

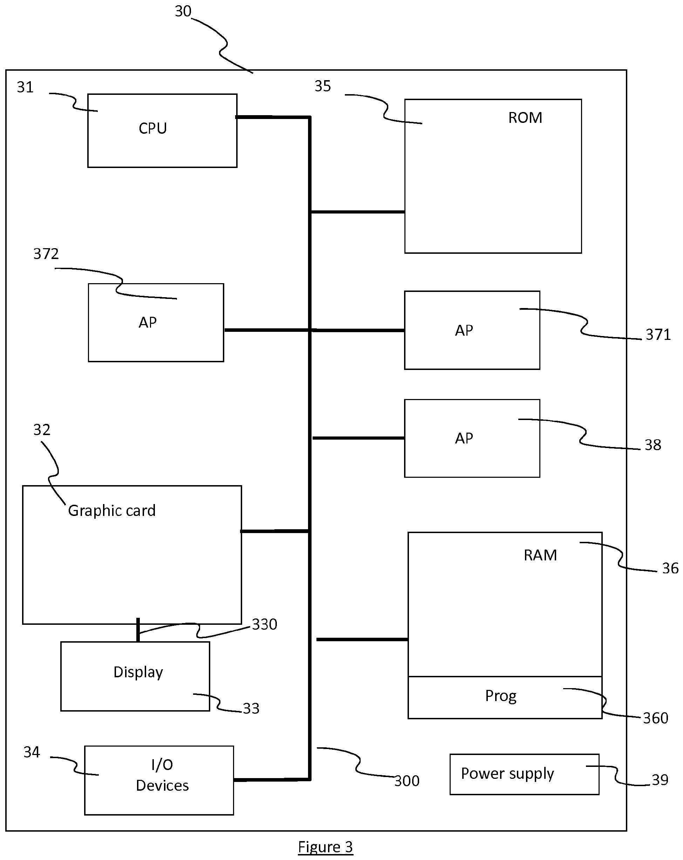

**Figure 3** describes the structure of a communication network device 30, such as the repeater 110 illustrated in figures 1a and 1b. This device can be a Wi-Fi repeater device.

In the particular embodiment of figure 3, the repeater 30 can comprise the following devices, linked together via a data and address bus 300, which can also carry a timer signal:
- a micro-processor 31 (or CPU) ;
- a graphics card 32 (depending on embodiments, such a card may be optional);
- at least one Input/ Output module 34, (like a keyboard, a mouse, a led, and so on);
- a ROM (or « Read Only Memory ») 35 ;
- a RAM (or « Random Access Memory ») 36 ;
- a first communication interface 371 configured for the reception and/or transmission of data, via a wireless connection (notably of type WIFI@ or Bluetooth) at a first frequency;
- a second communication interface 372 configured for the reception and/or transmission of data, via a wireless connection (notably of type WIFI® or Bluetooth);
- a wired communication interface 38;
- a power supply 39.

In some embodiments, the repeater 30 can also comprise, or be connected to, a display module 33, for instance a screen, directly connected to the graphics card 32 by a dedicated bus 330. In a variant, the display can be external to the electronic device 30. In some embodiments, the repeater 30 can communicate with the display 33 thanks to a wireless interface. In other embodiments, the repeater 30 can communicate with the display thanks to a wired interface, like a cable transmitting display signals. The repeater 30 can comprise a connector (not illustrated) or a transmitting module adapted to transmit a display signal to an external display apparatus like an LCD or plasma screen or a video projector.

Each of the mentioned memories can comprise at least one register, that is to say a memory zone of low capacity (a few binary data) or high capacity (with a capability of storage of a whole program or of all or part of data representative of data to be calculated or displayed).

When the repeater is powered on, the microprocessor 31 loads the program instructions 360 in a register of the RAM 36, notably the processes needed for performing at least one embodiment of the retransmitting method described herein, and executes the program instructions.

According to a variant, the repeater 30 comprises several microprocessors.

According to another variant, the power supply 39 is external to the repeater 30.

In the particular embodiment illustrated in figure 3, the microprocessor 31 can be configured for repeating data received, via said second commlunciation interface 372 or sid wired interface 38, in at least one first frame by forwarding said data in at least one second frame via said first wireless interface 371.

According to an embodiment of the present disclosure:
- when said second interface is a wireless interface 372 operating at a frequency different from said first frequency or a communication interface 38 using a communication protocol different from a communication protocol of said first interface, said second frame comprises a source address being an address of a transmitter of said first frame;
- when said second interface is a wireless interface 372 operating at said first frequency, said second frame comprises a source address different from said transmitter address of said first frame.

The communication network device 30 can notably belong to a system further comprising a wireless device and the microprocessor 31 can be configured for associating the first wireless interface to the wireless device.

The present disclosure has been described in relation with a WIFI distribution system.

Of course, as it will be understandable for a person skilled in the art, the present disclosure may also been applied in wireless distribution system using other network protocols, notably network protocols with acknowledgment of frames, like WIFI, WiMAX, or Bluetooth protocols.

## Claims

1. A method, to be performed in an intermediate device (110) of a communication network, for repeating data received from a client device (122, 124, 126) of said communication network by forwarding said data to a wireless Access Point (1300) of said communication network operating at a first frequency, said intermediate device comprising a plurality of communication interfaces, a first one (1102) of said communication interfaces being a wireless communication interface operating at said first frequency, said data being received in at least one first frame via a second (1102, 1104, 1106) of said communication interfaces and forwarded to said Access Point (1300) in at least one second frame via said first wireless interface,
said method being **characterized in that** :
- when said second communication interface (1102, 1104, 1106) is a wireless communication interface (1104) operating at a frequency different from said first frequency or a communication interface (1106) using a communication protocol different from a communication protocol of said first wireless interface, said second frame comprises a source address being an address (1242) of said client device;
- when said second communication interface (1102, 1104, 1106) is a wireless communication interface (1102) operating at said first frequency, said second frame comprises a source address different from said client device address.

2. The method according to claim 1 wherein said method comprises, prior to said receiving of said first frame, when said second communication interface is a wireless communication interface operating at said first frequency:
- receiving (220) an association request from said client device, via said second wireless communication interface,
- creating (260) a virtual client inside said intermediate device, said virtual client being identified by a virtual address being different from said client device address.

3. The method according to at least one of claims 1 to 2 wherein said method comprises, prior to said receiving of said first frame, when said second communication interface is a wireless communication interface (1104) operating at a frequency different from said first frequency or using a communication protocol different from the communication protocol of said first wireless interface:
- receiving an association request from said client device, via said second wireless interface;
- creating (250) a virtual client inside said communication network intermediate device, said virtual client being identified by a virtual address being assigned a value of an address of said client device.

4. The method according to at least one of claims 1 to 3 wherein said method comprises creating (280) a virtual client identified by a virtual address being an address of said client device, when said second interface (1106) is a wired interface.

5. The method according to at least one of claims 2 to 4 wherein the source address of said second frame is said virtual address of said virtual client.

6. The method according to at least one of claims 1 to 5 wherein said first frame is an Ethernet frame.

7. A communication network intermediate device (110) adapted for repeating data received from a client device (122, 124, 126) of said communication network by forwarding said data to a wireless Access Point (1300) of said communication network operating at a first frequency, said communication network intermediate device (110) comprising at least one processor and a plurality of communication interfaces (1102, 1104, 1106), a first one (1102) of said communication interfaces being a wireless communication interface operating at said first frequency, said data being received, via a second (1102, 1104, 1106) of said communication interfaces, in at least one first frame and forwarded in at least one second frame to said Access Point via said first wireless interface, said communication network intermediate device being **characterized in that**:
- when said second communication interface (1102, 1104, 1106) is a wireless communication interface (1104) operating at a frequency different from said first frequency or a communication interface using a communication protocol different from a communication protocol of said first wireless interface, said second frame comprises a source address being an address (1242) of said client device;
- when said second communication interface (1102, 1104, 1106) is a wireless communication interface (1102) operating at said first frequency, said second frame comprises a source address different from said client device address.

8. The communication network intermediate device (110) according to claim 7 wherein said at least one processor is configured for, prior to receiving said first frame, when said second communication interface is a wireless communication interface (1104, 1106) operating at a frequency different from said first frequency or using a communication protocol different from the communication protocol of said first wireless interface:
- receiving (220) an association request from said client device, via said second wireless interface;
- creating (260) a virtual client inside said communication network intermediate device, said virtual client being identified by a virtual address being assigned said client device address.

9. The communication network intermediate device (110) according to claim 7 or 8 wherein said at least one processor is configured for creating (280) a virtual client identified by a virtual address being said client device adress, when said second interface (1106) is a wired interface.

10. A system (100) comprising a communication network intermediate device (110) (110) adapted for repeating data received from a client device (122, 124, 126) of said system by forwarding said data to a wireless Access Point (1300) of said system operating at a first frequency, said communication network intermediate device (110) comprising at least one processor and a plurality of communication interfaces (1102, 1104, 1106), a first one (1102) of said communication interfaces (1102, 1104,1106) being a wireless communication interface operating at said first frequency, said data being received via a second (1102, 1104, 1106) of said communication interfaces, in at least one first frame and forwarded in at least one second frame to said Access Point (1102) via said first wireless interface, wherein said system is **characterized in that**:
- when said second communication interface (1102,1104,1106) is a wireless communication interface (1104) operating at a frequency different from said first frequency or a communication interface using a communication protocol different from a communication protocol of said first wireless interface, said second frame comprises a source address being an address (1242) of said client device;
- when said second communication interface (1102,1104,1106) is a wireless communication interface (1102) operating at said first frequency, said second frame comprises a source address different from said client device address.

11. The system according to claim 10 wherein said client device is a wireless client device and said processor is configured for associating said second wireless interface to said client wireless device.

12. The system according to claim 11 wherein said Access Point belongs to a wireless device (130) selected from the group consisting of:
- a gateway;
- a repeater;
- a router.

13. The system according to claim 11 or 12 wherein said wireless device (130) comprises a DHCP server.

14. A non-transitory computer readable program product, **characterized in that** it comprises program code instructions for performing, when said program code instructions are executed by a computer of the intermediate device of claim 7, a method, to be performed in the intermediate device (110) of a communication network for repeating data received from a client device (122, 124, 126) of said communication network by forwarding said data to a wireless Access Point (1300) of said communication network operating at a first frequency, said intermediate device comprising a plurality of communication interfaces, a first one (1102) of said communication interfaces being a wireless communication interface operating at a first frequency, said data being received in at least one first frame via a second (1102,1104,1106) of said communication interfaces and forwarded in at least one second frame to said Access Point (1300) via said first wireless interface, wherein:
- when said second communication interface (1102,1104,1106) is a wireless communication interface (1104) operating at a frequency different from said first frequency or a communication interface using a communication protocol different from a communication protocol of said first wireless interface, said second frame comprises a source address being an address of said client device;
- when said second interface (1102,1104,1106) is a wireless interface (1102) operating at said first frequency, said second frame comprises a source address different from said client deviceaddress.

15. Computer readable storage medium carrying a software program **characterized in that** said software program comprises program code instructions for performing, when said program code instructions are executed by a computer of the intermediate device of claim 7, a method, to be performed in the intermediate device of a communication network for repeating data received from a client device (122, 124, 126) of said communication network by forwarding said data to a wireless Access Point (1300) of said communication network operating at a first frequency, said intermediate device comprising a plurality of communication interfaces, a first one (1102) of said communication interfaces being a wireless communication interface operating at said first frequency, said data being received, via a second (1102,1104,1106) of said communication interfaces, in at least one first frame and forwarded in at least one second frame to said Access Point (1300) via said first wireless interface, wherein:
- when said second communication interface (1102,1104,1106) is a communication wireless interface (1104) operating at a frequency different from said first frequency or a communication interface using a communication protocol different from a communication protocol of said first wireless interface, said second frame comprises a source address being an address of said client device;
- when said second communication interface (1102,1104,1106) is a wireless communication interface (1102) operating at said first frequency, said second frame comprises a source address different from said client device address.

## Patentansprüche

1. Verfahren, das in einer Zwischenvorrichtung (110) eines Kommunikationsnetzes ausgeführt werden soll, um Daten, die von einer Client-Vorrichtung (122, 124, 126) des Kommunikationsnetzes empfangen werden, durch Weiterleiten der Daten zu einem drahtlosen Zugangspunkt (1300) des Kommunikationsnetzes, der bei einer ersten Frequenz arbeitet, zu wiederholen, wobei die Zwischenvorrichtung mehrere Kommunikationsschnittstellen umfasst, wobei eine erste (1102) der Kommunikationsschnittstellen eine drahtlose Kommunikationsschnittstelle, die bei der ersten Frequenz arbeitet, ist, wobei die Daten in mindestens einem ersten Rahmen über eine zweite (1102, 1104, 1106) der Kommunikationsschnittstellen empfangen werden und in mindestens einem zweiten Rahmen über die erste drahtlose Schnittstelle zu dem Zugangspunkt (1300) weitergeleitet werden,
wobei das Verfahren **dadurch gekennzeichnet ist, dass**
- der zweite Rahmen eine Quelladresse umfasst, die eine Adresse (1242) der Client-Vorrichtung ist, wenn die zweite Kommunikationsschnittstelle (1102, 1104, 1106) eine drahtlose Kommunikationsschnittstelle (1104), die bei einer anderen Frequenz als der ersten Frequenz arbeitet, oder eine Kommunikationsschnittstelle (1106), die ein anderes Kommunikationsprotokoll als die erste drahtlose Schnittstelle verwendet, ist;
- der zweite Rahmen eine andere Quelladresse als die Client-Vorrichtungs-Adresse umfasst, wenn die zweite Kommunikationsschnittstelle (1102, 1104, 1106) eine drahtlose Kommunikationsschnittstelle (1102), die bei der ersten Frequenz arbeitet, ist.

2. Verfahren nach Anspruch 1, wobei das Verfahren, wenn die zweite Kommunikationsschnittstelle eine drahtlose Kommunikationsschnittstelle, die bei der ersten Frequenz arbeitet, ist, vor dem Empfangen des ersten Rahmens Folgendes umfasst:
- Empfangen (220) einer Zuordnungsanforderung von der Client-Vorrichtung über die zweite drahtlose Kommunikationsschnittstelle,
- Erzeugen (260) eines virtuellen Clients innerhalb der Zwischenvorrichtung, wobei der virtuelle Client durch eine andere virtuelle Adresse als die Client-Vorrichtungs-Adresse identifiziert ist.

3. Verfahren nach mindestens einem der Ansprüche 1 bis 2, wobei das Verfahren, wenn die zweite Kommunikationsschnittstelle eine drahtlose Kommunikationsschnittstelle (1104), die bei einer anderen Frequenz als der ersten Frequenz arbeitet oder die ein anderes Kommunikationsprotokoll als die erste drahtlose Schnittstelle verwendet, ist, vor dem Empfangen des ersten Rahmens Folgendes umfasst:
- Empfangen einer Zuordnungsanforderung von der Client-Vorrichtung über die zweite drahtlose Schnittstelle;
- Erzeugen (250) eines virtuellen Clients innerhalb der Kommunikationsnetz-Zwischenvorrichtung, wobei der virtuelle Client durch eine virtuelle Adresse, die einem Wert einer Adresse der Client-Vorrichtung zugewiesen ist, identifiziert wird.

4. Verfahren nach mindestens einem der Ansprüche 1 bis 3, wobei das Verfahren das Erzeugen (280) eines virtuellen Clients, der durch eine virtuelle Adresse, die eine Adresse der Client-Vorrichtung ist, identifiziert ist, wenn die zweite Schnittstelle (1106) eine verdrahtete Schnittstelle ist, umfasst.

5. Verfahren nach mindestens einem der Ansprüche 2 bis 4, wobei die Quelladresse des zweiten Rahmens die virtuelle Adresse des virtuellen Clients ist.

6. Verfahren nach mindestens einem der Ansprüche 1 bis 5, wobei der erste Rahmen ein Ethernet-Rahmen ist.

7. Kommunikationsnetz-Zwischenvorrichtung (110), die dafür ausgelegt ist, Daten, die von einer Client-Vorrichtung (122, 124, 126) des Kommunikationsnetzes empfangen werden, durch Weiterleiten der Daten zu einem drahtlosen Zugangspunkt (1300) des Kommunikationsnetzes, der bei einer ersten Frequenz arbeitet, zu wiederholen, wobei die Kommunikationsnetz-Zwischenvorrichtung (110) mindestens einen Prozessor und mehrere Kommunikationsschnittstellen (1102, 1104, 1106) umfasst, wobei eine erste (1102) der Kommunikationsschnittstellen eine drahtlose Kommunikationsschnittstelle, die bei der ersten Frequenz arbeitet, ist, wobei die Daten in mindestens einem ersten Rahmen über eine zweite (1102, 1104, 1106) der Kommunikationsschnittstellen empfangen werden und in mindestens einem zweiten Rahmen über die erste drahtlose Schnittstelle zu dem Zugangspunkt weitergeleitet werden, wobei die Kommunikationsnetz-Zwischenvorrichtung **dadurch gekennzeichnet ist, dass**:
- der zweite Rahmen eine Quelladresse umfasst, die eine Adresse (1242) der Client-Vorrichtung ist, wenn die zweite Kommunikationsschnittstelle (1102, 1104, 1106) eine drahtlose Kommunikationsschnittstelle (1104), die bei einer anderen Frequenz als der ersten Frequenz arbeitet, oder eine Kommunikationsschnittstelle, die ein anderes Kommunikationsprotokoll als die erste drahtlose Schnittstelle verwendet, ist;
- der zweite Rahmen eine andere Quelladresse als die Client-Vorrichtungs-Adresse umfasst, wenn die zweite Kommunikationsschnittstelle (1102, 1104, 1106) eine drahtlose Kommunikationsschnittstelle (1102), die bei der ersten Frequenz arbeitet, ist.

8. Kommunikationsnetz-Zwischenvorrichtung (110) nach Anspruch 7, wobei der mindestens eine Prozessor vor dem Empfangen des ersten Rahmens, wenn die zweite Kommunikationsschnittstelle eine drahtlose Kommunikationsschnittstelle (1104, 1106), die bei einer anderen Frequenz als der ersten Frequenz arbeitet oder die ein anderes Kommunikationsprotokoll als die erste drahtlose Schnittstelle verwendet, ist, für Folgendes konfiguriert ist:
- Empfangen (220) einer Zuordnungsanforderung von der Client-Vorrichtung über die zweite drahtlose Schnittstelle,
- Erzeugen (260) eines virtuellen Clients innerhalb der Kommunikationsnetz-Zwischenvorrichtung, wobei der virtuelle Client durch eine virtuelle Adresse identifiziert ist, die der Client-Vorrichtungs-Adresse zugewiesen ist.

9. Kommunikationsnetz-Zwischenvorrichtung (110) nach Anspruch 7 oder 8, wobei der mindestens eine Prozessor dafür konfiguriert ist, einen virtuellen Client zu erzeugen (280), der durch eine virtuelle Adresse identifiziert ist, die die Client-Vorrichtungs-Adresse ist, wenn die zweite Schnittstelle (1106) eine verdrahtete Schnittstelle ist.

10. System (100), das eine Kommunikationsnetz-Zwischenvorrichtung (110) umfasst, die dafür ausgelegt ist, Daten, die von einer Client-Vorrichtung (122, 124, 126) des Systems empfangen werden, durch Weiterleiten der Daten zu einem drahtlosen Zugangspunkt (1300) des Systems, der bei einer ersten Frequenz arbeitet, zu wiederholen, wobei die Kommunikationsnetz-Zwischenvorrichtung (110) mindestens einen Prozessor und mehrere Kommunikationsschnittstellen (1102, 1104, 1106) umfasst, wobei eine erste (1102) der Kommunikationsschnittstellen (1102, 1104, 1106) eine drahtlose Kommunikationsschnittstelle, die bei der ersten Frequenz arbeitet, ist, wobei die Daten in mindestens einem ersten Rahmen über eine zweite (1102, 1104, 1106) der Kommunikationsschnittstellen empfangen werden und in mindestens einem zweiten Rahmen über die erste drahtlose Schnittstelle (1102) zu dem Zugangspunkt weitergeleitet werden, wobei das System **dadurch gekennzeichnet ist, dass**:
- der zweite Rahmen eine Quelladresse umfasst, die eine Adresse (1242) der Client-Vorrichtung ist, wenn die zweite Kommunikationsschnittstelle (1102, 1104, 1106) eine drahtlose Kommunikationsschnittstelle (1104), die bei einer anderen Frequenz als der ersten Frequenz arbeitet, oder eine Kommunikationsschnittstelle, die ein anderes Kommunikationsprotokoll als die erste drahtlose Schnittstelle verwendet, ist;
- der zweite Rahmen eine andere Quelladresse als die Client-Vorrichtungs-Adresse umfasst, wenn die zweite Kommunikationsschnittstelle (1102, 1104, 1106) eine drahtlose Kommunikationsschnittstelle (1102), die bei der ersten Frequenz arbeitet, ist.

11. System nach Anspruch 10, wobei die Client-Vorrichtung eine drahtlose Client-Vorrichtung ist und wobei der Prozessor dafür konfiguriert ist, die drahtlose Schnittstelle der drahtlosen Client-Vorrichtung zuzuordnen.

12. System nach Anspruch 11, wobei der Zugangspunkt zu einer drahtlosen Vorrichtung (130) gehört, die aus der Gruppe ausgewählt ist, die besteht aus:
- einem Gateway;
- einem Zwischenverstärker;
- einem Router.

13. System nach Anspruch 11 oder 12, wobei die drahtlose Vorrichtung (130) einen DHCP-Server umfasst.

14. Nichttransitorisches computerlesbares Programmprodukt, **dadurch gekennzeichnet, dass** das Programmprodukt Programmcodebefehle umfasst, um, wenn die Programmcodebefehle durch einen Computer der Zwischenvorrichtung nach Anspruch 7 ausgeführt werden, ein Verfahren auszuführen, das in der Zwischenvorrichtung (110) eines Kommunikationsnetzes ausgeführt werden soll, um Daten, die von einer Client-Vorrichtung (122, 124, 126) des Kommunikationsnetzes empfangen werden, durch Weiterleiten der Daten zu einem drahtlosen Zugangspunkt (1300) des Kommunikationsnetzes, der bei einer ersten Frequenz arbeitet, zu wiederholen, wobei die Zwischenvorrichtung mehrere Kommunikationsschnittstellen umfasst, wobei eine erste (1102) der Kommunikationsschnittstellen eine drahtlose Kommunikationsschnittstelle, die bei einer ersten Frequenz arbeitet, ist, wobei die Daten in mindestens einem ersten Rahmen über eine zweite (1102, 1104, 1106) der Kommunikationsschnittstellen empfangen werden und in mindestens einem zweiten Rahmen über die erste drahtlose Schnittstelle zu dem Zugangspunkt (1300) weitergeleitet werden, wobei:
- der zweite Rahmen eine Quelladresse umfasst, die eine Adresse der Client-Vorrichtung ist, wenn die zweite Kommunikationsschnittstelle (1102, 1104, 1106) eine drahtlose Kommunikationsschnittstelle (1104), die bei einer anderen Frequenz als der ersten Frequenz arbeitet, oder eine Kommunikationsschnittstelle, die ein anderes Kommunikationsprotokoll als die erste drahtlose Schnittstelle verwendet, ist;
- der zweite Rahmen eine andere Quelladresse als die Client-Vorrichtungs-Adresse umfasst, wenn die zweite Schnittstelle (1102, 1104, 1106) eine drahtlose Kommunikationsschnittstelle (1102), die bei der ersten Frequenz arbeitet, ist.

15. Computerlesbares Speichermedium, das ein Softwareprogramm trägt, **dadurch gekennzeichnet, dass** das Softwareprogramm Programmcodebefehle umfasst, um, wenn die Programmcodebefehle durch einen Computer der Zwischenvorrichtung nach Anspruch 7 ausgeführt werden, ein Verfahren auszuführen, das in der Zwischenvorrichtung eines Kommunikationsnetzes ausgeführt werden soll, um Daten, die von einer Client-Vorrichtung (122, 124, 126) des Kommunikationsnetzes empfangen werden, durch Weiterleiten der Daten zu einem drahtlosen Zugangspunkt (1300) des Kommunikationsnetzes, der bei einer ersten Frequenz arbeitet, zu wiederholen, wobei die Zwischenvorrichtung mehrere Kommunikationsschnittstellen umfasst, wobei eine erste (1102) der Kommunikationsschnittstellen eine drahtlose Kommunikationsschnittstelle, die bei der ersten Frequenz arbeitet, ist, wobei die Daten in mindestens einem ersten Rahmen über eine zweite (1102, 1104, 1106) der Kommunikationsschnittstellen empfangen werden und in mindestens einem zweiten Rahmen über die erste drahtlose Schnittstelle zu dem Zugangspunkt (1300) weitergeleitet werden, wobei:
- der zweite Rahmen eine Quelladresse umfasst, die eine Adresse der Client-Vorrichtung ist, wenn die zweite Kommunikationsschnittstelle (1102, 1104, 1106) eine drahtlose Kommunikationsschnittstelle (1104), die bei einer anderen Frequenz als der ersten Frequenz arbeitet, oder eine Kommunikationsschnittstelle, die ein anderes Kommunikationsprotokoll als die erste drahtlose Schnittstelle verwendet, ist;
- der zweite Rahmen eine andere Quelladresse als die Client-Vorrichtungs-Adresse umfasst, wenn die zweite Kommunikationsschnittstelle (1102, 1104, 1106) eine drahtlose Kommunikationsschnittstelle (1102), die bei der ersten Frequenz arbeitet, ist.

## Revendications

1. Un procédé, exécuté dans un dispositif intermédiaire (110) d'un réseau de communication, pour répéter des données reçues d'un dispositif client (122, 124, 126) dudit réseau de communication en transférant lesdites données vers un point d'accès sans fil (1300) dudit réseau de communication fonctionnant à une première fréquence, ledit dispositif intermédiaire comprenant une pluralité d'interfaces de communication, une première (1102) desdites interfaces de communication étant une interface de communication sans fil fonctionnant à ladite première fréquence, lesdites données étant reçues dans au moins une première trame par l'intermédiaire d'une seconde (1102, 1104, 1106) desdites interfaces de communication et transmises dans au moins une seconde trame audit point d'accès (1300) par l'intermédiaire de ladite première interface sans fil, ledit procédé étant **caractérisé en ce que** :
- lorsque ladite seconde interface de communication (1102, 1104, 1106) est une interface de communication sans fil (1104) fonctionnant à une fréquence différente de ladite première fréquence ou une interface de communication (1106) utilisant un protocole de communication différent d'un protocole de communication de ladite première interface sans fil, ladite seconde trame comprend une adresse source étant une adresse (1242) dudit dispositif client ;
- lorsque ladite seconde interface de communication (1102, 1104, 1106) est une interface de communication sans fil (1102) fonctionnant à ladite première fréquence, ladite seconde trame comprend une adresse source différente de ladite adresse du dispositif client.

2. Le procédé selon la revendication 1, dans lequel ledit procédé comprend, préalablement à la réception de ladite première trame, lorsque ladite seconde interface de communication est une interface de communication sans fil fonctionnant à ladite première fréquence :
- une réception (220) d'une requête d'association en provenance dudit dispositif client, par l'intermédiaire de ladite seconde interface de communication sans fil ;
- une création (260) d'un client virtuel à l'intérieur dudit dispositif intermédiaire, ledit client virtuel étant identifié par une adresse virtuelle différente de ladite adresse du dispositif client.

3. Le procédé selon au moins l'une des revendications 1 à 2, dans lequel ledit procédé comprend, préalablement à la réception de ladite première trame, lorsque ladite seconde interface de communication est une interface de communication sans fil (1104) fonctionnant à une fréquence différente de ladite première fréquence ou utilisant un protocole de communication différent du protocole de communication de ladite première interface sans fil :
- une réception d'une requête d'association en provenance dudit dispositif client, par l'intermédiaire de ladite seconde interface sans fil ;
- une création (250) d'un client virtuel à l'intérieur dudit dispositif intermédiaire dudit réseau de communication, ledit client virtuel étant identifié par une adresse virtuelle à laquelle est affectée une valeur d'une adresse dudit dispositif client.

4. Le procédé selon au moins l'une des revendications 1 à 3, dans lequel ledit procédé comprend la création (280) d'un client virtuel identifié par une adresse virtuelle correspondant à une adresse dudit dispositif client, lorsque ladite seconde interface (1106) est une interface câblée.

5. Le procédé selon au moins l'une des revendications 2 à 4, dans lequel l'adresse source de ladite seconde trame est ladite adresse virtuelle dudit client virtuel.

6. Le procédé selon au moins l'une des revendications 1 à 5, dans lequel ladite première trame est une trame Ethernet.

7. Un dispositif intermédiaire (110) d'un réseau de communication adapté pour répéter des données reçues d'un dispositif client (122, 124, 126) dudit réseau de communication, en transférant lesdites données vers un point d'accès sans fil (1300) dudit réseau de communication fonctionnant à une première fréquence, ledit dispositif intermédiaire (110) du réseau de communication comprenant au moins un processeur et une pluralité d'interfaces de communication (1102, 1104, 1106), une première (1102) desdites interfaces de communication étant une interface de communication sans fil fonctionnant à ladite première fréquence, lesdites données étant reçues dans au moins une première trame par l'intermédiaire d'une seconde (1102, 1104, 1106) desdites interfaces de communication et transmises dans au moins une seconde trame audit point d'accès par l'intermédiaire de ladite première interface sans fil, ledit dispositif intermédiaire du réseau de communication étant **caractérisé en ce que** :
- lorsque ladite seconde interface de communication (1102, 1104, 1106) est une interface de communication sans fil (1104) fonctionnant à une fréquence différente de ladite première fréquence ou une interface de communication utilisant un protocole de communication différent d'un protocole de communication de ladite première interface sans fil, ladite seconde trame comprend une adresse source étant une adresse (1242) dudit dispositif client ;
- lorsque ladite seconde interface de communication (1102, 1104, 1106) est une interface de communication sans fil (1102) fonctionnant à ladite première fréquence, ladite seconde trame comprend une adresse source différente de ladite adresse du dispositif client.

8. Le dispositif intermédiaire (110) du réseau de communication selon la revendication 7, dans lequel, préalablement à la réception de ladite première trame, lorsque ladite seconde interface de communication est une interface de communication sans fil (1104,1106) fonctionnant à une fréquence différente de ladite première fréquence ou utilisant un protocole de communication différent du protocole de communication de ladite première interface sans fil, ledit au moins un processeur est configuré pour :
- une réception (220) d'une requête d'association en provenance dudit dispositif client, par l'intermédiaire de ladite seconde interface sans fil ;
- une création (260) d'un client virtuel à l'intérieur dudit dispositif intermédiaire du réseau de communication, ledit client virtuel étant identifié par une adresse virtuelle à laquelle est affectée ladite adresse du dispositif client.

9. Le dispositif intermédiaire (110) du réseau de communication selon la revendication 7 ou 8, dans lequel ledit au moins un processeur est configuré pour la création (280) d'un client virtuel identifié par une adresse virtuelle correspondant à une adresse dudit dispositif client, lorsque ladite seconde interface (1106) est une interface câblée.

10. Un système (100) comprenant un dispositif intermédiaire (110) d'un réseau de communication adapté pour répéter des données reçues depuis un dispositif client (122, 124, 126) dudit système, en transférant lesdites données vers un point d'accès sans fil (1300) dudit système fonctionnant à une première fréquence, ledit dispositif intermédiaire (110) du réseau de communication comprenant au moins un processeur et une pluralité d'interfaces de communication (1102, 1104, 1106), une première (1102) desdites interfaces de communication (1102, 1104, 1106) étant une interface de communication sans fil fonctionnant à ladite première fréquence, lesdites données étant reçues dans au moins une première trame par l'intermédiaire d'une seconde (1102, 1104, 1106) desdites interfaces de communication et transmises dans au moins une seconde trame audit point d'accès par l'intermédiaire de ladite première interface sans fil (1102),
dans lequel ledit système est **caractérisé en ce que** :
- lorsque ladite seconde interface de communication (1102, 1104, 1106) est une interface de communication sans fil (1104) fonctionnant à une fréquence différente de ladite première fréquence ou une interface de communication utilisant un protocole de communication différent d'un protocole de communication de ladite première interface sans fil, ladite seconde trame comprend une adresse source étant une adresse (1242) dudit dispositif client ;
- lorsque ladite seconde interface de communication (1102, 1102, 1104, 1106) est une interface de communication sans fil (1102) fonctionnant à ladite première fréquence, ladite seconde trame comprend une adresse source différente de ladite adresse du dispositif client.

11. Le système selon la revendication 10, dans lequel ledit dispositif client est un dispositif client sans fil et ledit processeur est configuré pour l'association de ladite seconde interface sans fil audit dispositif client sans fil.

12. Le système selon la revendication 11, dans lequel ledit point d'accès appartient à un dispositif sans fil (130) sélectionné dans le groupe constitué :
- d'une passerelle ;
- d'un répéteur ;
- d'un routeur.

13. Le ystème selon la revendication 11 ou 12, dans lequel ledit dispositif sans fil (130) comprend un serveur DHCP.

14. A programme non transitoire lisible par ordinateur, **caractérisé en ce qu'**il comprend des instructions de code de programme pour effectuer, lorsque lesdites instructions de code de programme sont exécutées par un ordinateur du dispositif intermédiaire de la revendication 7, un procédé exécuté dans le dispositif intermédiaire (110) d'un réseau de communication pour répéter des données reçues depuis un dispositif client (122, 124, 126) dudit réseau de communication, en transférant lesdites données vers un point d'accès sans fil (1300) dudit réseau de communication fonctionnant à une première fréquence, ledit dispositif intermédiaire comprenant une pluralité d'interfaces de communication, une première (1102) desdites interfaces de communication étant une interface de communication sans fil fonctionnant à ladite première fréquence, lesdites données étant reçues dans au moins une première trame par l'intermédiaire d'une seconde (1102, 1104, 1106) desdites interfaces de communication et transmises dans au moins une seconde trame audit point d'accès (1300) par l'intermédiaire de ladite première interface sans fil, dans lequel :
- lorsque ladite seconde interface de communication (1102, 1104, 1106) est une interface de communication sans fil (1104) fonctionnant à une fréquence différente de ladite première fréquence ou une interface de communication utilisant un protocole de communication différent d'un protocole de communication de ladite première interface sans fil, ladite seconde trame comprend une adresse source étant une adresse dudit dispositif client ;
- lorsque ladite seconde interface (1102, 1104, 1106) est une interface sans fil (1102) fonctionnant à ladite première fréquence, ladite seconde trame comprend une adresse source différente d'une adresse dudit dispositif client.

15. Support de stockage lisible par ordinateur comportant un programme logiciel **caractérisé en ce que** ledit programme logiciel comprend des instructions de code de programme pour effectuer, lorsque lesdites instructions de code de programme sont exécutées par un ordinateur du dispositif intermédiaire de la revendication 7, un procédé exécuté dans le dispositif intermédiaire d'un réseau de communication pour répéter des données reçues depuis un dispositif client (122, 124, 126) dudit réseau de communication, en transférant lesdites données vers un point d'accès sans fil (1300) dudit réseau de communication fonctionnant à une première fréquence, ledit dispositif intermédiaire comprenant une pluralité d'interfaces de communication, une première (1102) desdites interfaces de communication étant une interface de communication sans fil fonctionnant à ladite première fréquence, lesdites données étant reçues dans au moins une première trame par l'intermédiaire d'une seconde (1102, 1104, 1106) desdites interfaces de communication et transmises dans au moins une seconde trame audit point d'accès (1300) par l'intermédiaire de ladite première interface sans fil, dans lequel :
- lorsque ladite seconde interface de communication (1102, 1104, 1106) est une interface de communication sans fil (1104) fonctionnant à une fréquence différente de ladite première fréquence ou une interface de communication utilisant un protocole de communication différent d'un protocole de communication de ladite première interface sans fil, ladite seconde trame comprend une adresse source étant une adresse dudit dispositif client ;
- lorsque ladite seconde interface de communication (1102, 1104, 1106) est une interface de communication sans fil (1102) fonctionnant à ladite première fréquence, ladite seconde trame comprend une adresse source différente de ladite adresse du dispositif client.
